# EUROPÄISCHE PATENTSCHRIFT

(11) **EP 1 172 571 B1**
(45) Veröffentlichungstag und Bekanntmachung des Hinweises auf die Patenterteilung: **22.09.2004**
(21) Anmeldenummer: 01810663.3
(22) Anmeldetag: 05.07.2001
(51) Int. Cl.: F16B 21/16

(54) **Verriegelungssystem**
Locking system
Système de verrouillage

(30) Priorität: 15.07.2000 DE 10034438
(43) Veröffentlichungstag der Anmeldung: 16.01.2002
(73) Patentinhaber: HILTI Aktiengesellschaft, 9494 Schaan (LI)
(72) Erfinder: Hauptmann, Udo, 86899 Landsberg/Lech (DE); Grünewald, Heinz, 81377 München (DE)
(74) Vertreter: Wildi, Roland

(56) Entgegenhaltungen:
- GB-A- 590 021
- GB-A- 839 608

## Beschreibung

Die Erfindung bezeichnet ein Verriegelungssystem mit dem Bauteile wie Förderwendeln von zumindest teilweise drehenden und/oder schlagenden Bohrwerkzeugen, Federn, Zahnräder, Kupplungen, Schalthebel und ähnliches auf zylindrischen Schäften leicht montier- sowie demontierbar sind, und axial fixiert werden können.

Nach der US4645372 besteht ein Verriegelungssystem zur schnell montier- sowie demontierbaren formschlüssigen Verbindung auf zylindrischen Schäften aus dem eine umlaufende radiale Nut aufweisenden Schaft und einer aussen koaxial zugeordneten Hülse mit einer Radialöffnung, welche ein Verriegelungselement in Form einer Kugel beinhaltet, die durch eine federnd vorgespannte und axial versetzbare Arretierungshülse im Verriegelungszustand zum axial formschlüssigen Eingriff in die Nut des Schafts gezwungen wird und diesen axial fixiert.

Nach der US5335947 wird ein derartiges Verriegelungssystem mit einem Verriegelungselement in Form einer Kugel und einer federnd vorgespannten und axial versetzbaren Arretierungshülse zur axial fixierten Verbindung von Rohren verwendet.

Nach der GB 590,021 A umfasst ein weiteres, derartiges Verriegelungssystem für eine axiale Fixierung eines Rohres eine Arretierungshülse, die eine Einführöffnung für ein, als Kugel ausgebildete Verriegelungselement und eine in der Tiefe variierende, bezüglich der Achse der Arretierungshülse exzentrisch ausgebildete Innennut aufweist. In die Einführöffnung wird ein Mitnehmerteil eingesetzt, welches in die Innennut eindringt und die Kugel beim Verdrehen der Arretierungshülse führt, wobei das Verriegelungssystem dabei verspannt wird.

Nach der DE19727187A1 wird ein Schraubbit über ein Verriegelungssystem mit dem Werkzeugschaft für ein Elektrohandwerkzeuggerät verbunden, wobei ein Verriegelungselement in Form einer Kugel in eine innere Ausnehmung einer Hülse eingreift.

Nach der US4957387 wird ein Verriegelungselement in Form einer Kugel zusätzlich zu einer, einen Formschluss erzwingenden, axial versetzbaren Arretierungshülse, direkt durch eine umlaufende, radial vorgespannte Feder kraftschlüssig in die Nut gezwungen, welche den Schaft temporär axial fixiert.

Die Aufgabe der Erfindung besteht in der Realisierung eines dynamisch stark axial belastbaren, einfach montier- und demontierbaren Verriegelungssystem für einen zylinderförmigen Schaft.

Die Aufgabe wird im wesentlichen durch die Merkmale des unabhängigen Anspruchs gelöst. Vorteilhafte Weiterbildungen ergeben sich aus den Unteransprüchen.

Im wesentlichen setzt sich das Verriegelungssystem aus zumindest einem Verriegelungselement, vorteilhaft in Form von Kugeln, einem Schaft mit einer dem Verriegelungselement zugeordneten, axial begrenzten, radialen Ausnehmung und einer Hülse zusammen. Dabei weist die Hülse eine koaxiale zentrale Öffnung, eine dem Verriegelungselement zugeordnete radial verlaufende Einführöffnung und je eine, in einer gemeinsamen, senkrecht zur Achse der Hülse verlaufenden, Ebene liegende, zumindest einen Halbraum umlaufende, Aussennut und dem Verriegelungselement zugeordnete Innennut auf. Die Aussennut nimmt einen radial vorgespannten, innerhalb eines Halbraumes einen offenen Sektor ausbildenden Federring des Verriegelungssystems mit beidends, nach innen spitz abgewinkelten Schenkeln, welche sich durch jeweilige zugeordnete radiale Durchtrittsöffnungen der Hülse in die Innennut erstrecken, auf.

Vorteilhaft werden aus Symmetriegründen zwei Kugeln als Verriegelungselemente verwendet, welche vorteilhaft in zwei zugeordnete, einander diametral gegenüberliegende, kugelkalottenförmige radiale Aussparungen des Schaftes eingreifen.

Weiter vorteilhaft ist den Durchtrittsöffnungen eine äussere, axial verlaufende, Längsnut zugeordnet, welche die Einführung eines spitzen Demontagewerkzeugs hinter den Federring gestattet.

Vorteilhaft ist die Hülse im Bereich der Einführöffnung aussen abgeflacht, wodurch formschlüssig ein Drehmoment aufgebracht werden kann.

Der Federring ist auf der Hülse in der umlaufenden Aussennut vormontiert, wobei zwei Schenkel des Federringes durch die radial verlaufenden Durchtrittsöffnungen in die Innennut ragen. Bei der Verriegelung wird die Hülse über einen Schaft, insbesondere innerhalb eines Bohrwerkzeuges, geschoben, so dass die Einführöffnung über einer am Schaft des Bohrwerkzeuges angeordneten Ausnehmung liegt. Eine Kugel wird eingelegt und durch Drehen der Hülse in die Innennut geführt. Durch weiteres Drehen der Hülse drückt die Kugel einen Schenkel des Federrings durch die Durchtrittsöffnungen nach aussen, der dann nach dem Passieren der Kugel hinter dieser wieder einrastet. Unter Beibehaltung der Drehrichtung wird die Einführöffnung über eine zweite Ausnehmung am Schaft des Bohrwerkzeuges gelegt und die zweite Kugel wird gleich wie die erste Kugel in die Innennut der Hülse eingelegt. Die Kugel bildet mit der Ausnehmung des Schaftes und der Innennut der Hülse einen axial fixierten Formschluss aus. Die Verriegelung ist somit ohne Hilfsmittel möglich. Für die Entriegelung wird ein steifes, spitzes Hilfsmittel, wie ein Schraubendreher, benötigt, wellches längs der Längsnut hinter den Federring eingreift.

Die Vorteile der Erfindung liegen in einer leichten Handhabung der Ver- und Entriegelung. Die Verriegelung ist statisch und dynamisch stark axial und auch in geringerem Maße radial, mit hohen Kräften, welche insbesondere beim Schlagbohren auftreten, belastbar. Das Verund Entriegeln ist häufig wiederholbar. Es sind dafür keine speziellen Vorrichtungen oder Werkzeuge erforderlich.

Die Erfindung wird bezüglich eines vorteilhaften Ausführungsbeispiels näher erläutert mit:

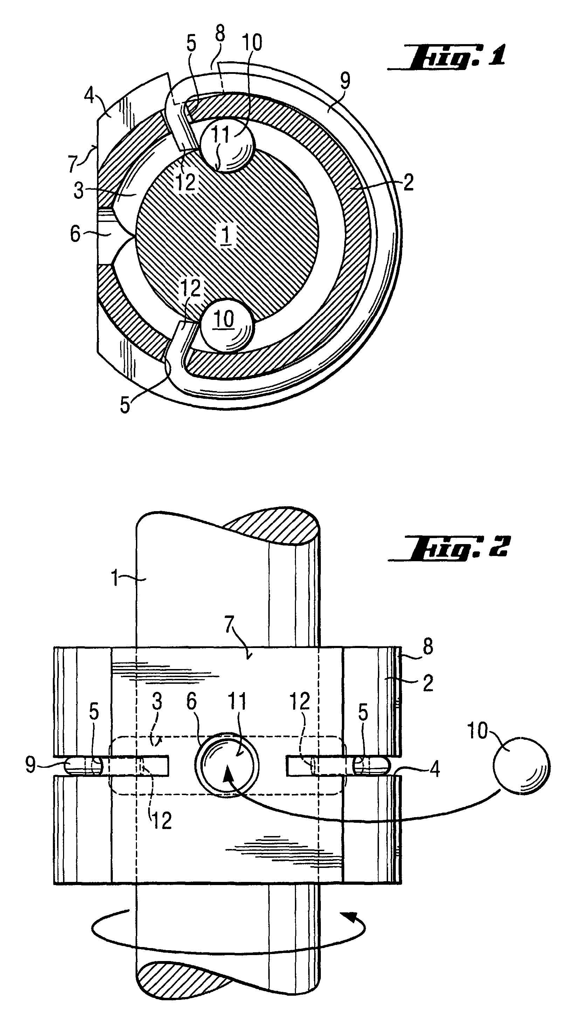

Fig. 1 als Verriegelungssystem.

Nach Fig. 1 besteht ein Verriegelungssystem aus einem zylindrischen Schaft 1, einer koaxial zugeordneten äusseren Hülse 2 mit einer, in einer, senkrecht zur Achse der Hülse 2 verlaufenden, Ebene liegenden, umlaufenden Innennut 3 und Aussennut 4, zwei zwischen diesen radial verlaufenden Durchtrittsöffnungen 5 sowie einer radialen Einführöffnung 6 an einer Abflachung 7 der Hülse 2, einer der Durchtrittsöffnungen 5 zugeordneten Längsnut 8, einem in der Aussennut 4 angeordneten Federring 9 und aus zwei Kugeln 10. Am zylindrischen Schaft 1 befinden sich diametral versetzte, kugelkalottenförmige Ausnehmungen 11. Der Federring 9 ist auf der Hülse 2 in der Aussennut 4 vormontiert, wobei seine beiden Schenkel 12 durch die Durchtrittsöffnungen 5 in die Innennut 3 ragen.

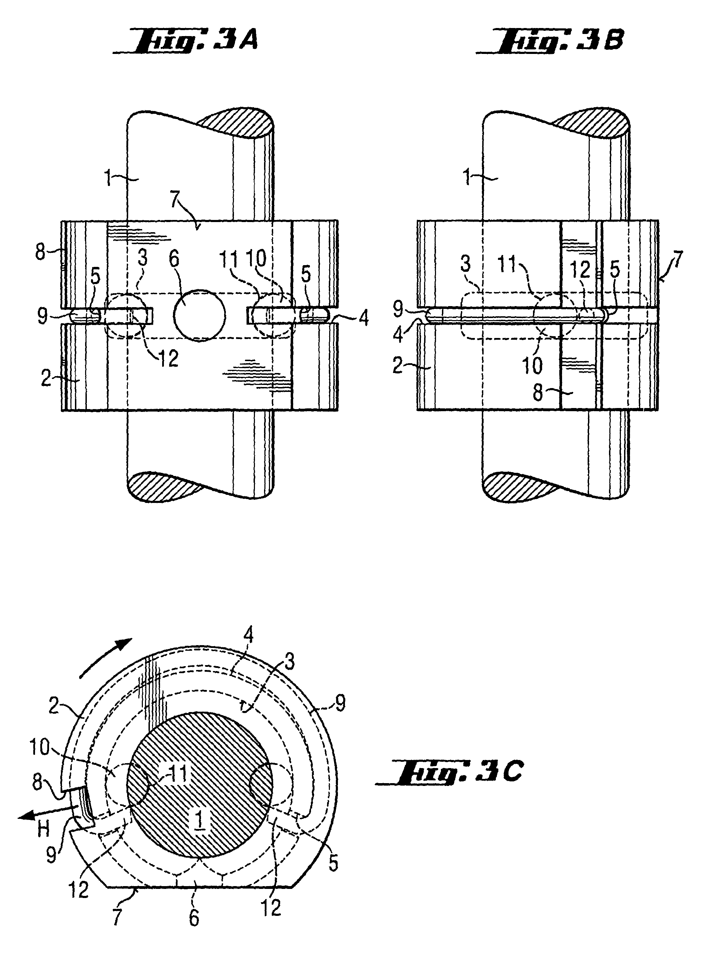

Nach Fig. 2 wird bei der Verriegelung die Hülse 2 über den Schaft 1 geschoben und die Einführöffnung 6 über einer Ausnehmung 11 positioniert. Eine Kugel 10 wird eingelegt und durch Verdrehen der Hülse 2 in die Innennut 3 überführt. Durch weiteres Verdrehen der Hülse 2 drückt die Kugel 10 einen Schenkel 12 des Federrings 9 nach außen, der dann hinter der Kugel 10 wieder einrastet. Unter Beibehaltung der Drehrichtung wird die Einführöffnung über die zweite Ausnehmung positioniert und mit der zweiten Kugel der Vorgang wiederholt. Ein Überspringen der Kugeln an den Innenseiten der Schenkel wird durch sich über den Halbmesser der Kugeln erstreckende Schenkellängen und eine spitze Abwinkelung verhindert.

Nach Fig. 3 A, B und C ist die Hülse 2 verriegelt, indem die Kugeln 10 zwischen den beiden Schenkeln 12 des Federrings 9 radial formschlüssig und die Hülse 2 durch die Innennut 3 über die Kugeln 10 mit den Ausnehmungen 11 des Schafts 1 axial formschlüssig fixiert werden. Sie ist axial und in geringerem Maße radial belastbar. Bei der Entriegelung wird mittels eines steifen, spitzen Hilfsmittels H in der Längsnut 8 der Federring 9 leicht radial ausgehebelt, wodurch der Schenkel 12 über den Kugelmittelpunkt gedrückt wird. Die Kugel 10 wird durch gleichzeitiges Verdrehen der Hülse 2 zur Einführöffnung 6 überführt und entnommen. Durch fortgesetztes Verdrehen der Hülse 2 wird in gleicher Weise die zweite Kugel 10 entnommen und die Hülse 2 somit entriegelt.

## Patentansprüche

1. Verriegelungssystem mit zumindest einem Verriegelungselement (10), einem Schaft (1) mit einer dem Verriegelungselement (10) zugeordneten, axial begrenzten, radialen Ausnehmung (11) und einer Hülse (2) mit einer koaxialen zentralen Öffnung und einer, dem Verriegelungselement zugeordneten, radial verlaufenden Einführöffnung (6), **dadurch gekennzeichnet, dass** die Hülse (2) je eine, in einer gemeinsamen, senkrecht zur Achse der Hülse (2) verlaufenden, Ebene liegende, zumindest einen Halbraum umlaufende, Aussennut (4) und dem Verriegelungselement zugeordnete Innennut (3) aufweist, wobei die Aussennut (4) einen radial vorgespannten, innerhalb eines Halbraumes einen offenen Sektor ausbildenden Federring (9) des Verriegelungssystems mit beidends, nach innen spitz abgewinkelten Schenkeln (12), welche sich durch jeweilige zugeordnete radiale Durchtrittsöffnungen (5) der Hülse (2) in die Innennut (3) erstrecken, aufnimmt.

2. Verriegelungssystem nach Anspruch 1, **dadurch gekennzeichnet, dass** zwei, als Kugeln (10) ausgeführte, Verriegelungselemente vorhanden sind.

3. Verriegelungssystem nach Anspruch 1 oder Anspruch 2, **dadurch gekennzeichnet, dass** den Durchtrittsöffnungen (5) eine äussere, axial verlaufende, Längsnut (8) zugeordnet ist.

4. Verriegelungssystem nach einem der vorherigen Ansprüche, **dadurch gekennzeichnet, dass** die Hülse (2) im Bereich der Einführöffnung (6) aussen abgeflacht ist.

## Claims

1. Locking system with at least one locking element (10), a shaft (1) with an axially defined radial cutout (11) which is associated with the locking element (10), and a sleeve (2) with a coaxial central opening and a radially extending insert opening (6) associated with the locking element, **characterised in that** the sleeve (2) comprises a respective external groove (4) located in a common plane extending perpendicularly to the axis of the sleeve (2) and surrounding at least a semi-space and an inner groove (3) associated with the locking element, and the outer groove (4) accommodates a radially pretensioned spring washer (9) arranged within a semi-space and establishing an open sector with shanks (12) which are on both sides inwardly acutely angled and extend through respectively associated radial passage openings (5) of the sleeve (2) into the inner groove (3).

2. Locking system according to Claim 1, **characterised by** two locking elements of spherical shape (10).

3. Locking system according to Claim 1 or Claim 2, **characterised in that** the passage openings (5) are associated with an outer axially extending longitudinal groove (8).

4. Locking system according to one of the above claims, **characterised in that** the sleeve (2) is in the area of the insert opening (6) externally flattened.

## Revendications

1. Système de verrouillage avec au moins un élément de verrouillage (10), une tige (1) avec un évidement radial limité axialement (11) associé à l'élément de verrouillage (10) et un manchon (2) avec un orifice central coaxial et un orifice d'introduction s'étendant radialement (6) tourné vers l'élément de verrouillage, **caractérisé en ce que** le manchon (2) comporte une rainure extérieure (4) et une rainure intérieure (3) associée à l'élément de verrouillage, lesquelles sont réalisées dans un plan commun perpendiculaire à l'axe du manchon (2) et s'étendent sur au moins un demi-périmètre, la rainure extérieure (4) recevant un anneau élastique à précontrainte radiale (9) du système de verrouillage, lequel crée un secteur ouvert à l'intérieur d'un demi-périmètre et comporte à ses deux extrémités des branches repliées à angle aigu vers l'intérieur (12) qui pénètrent dans la rainure intérieure (3) à travers des orifices traversants radiaux associés respectifs (5) du manchon (2).

2. Système de verrouillage selon la revendication 1, **caractérisé en ce qu'**il est prévu deux éléments de verrouillage conformés en billes (10).

3. Système de verrouillage selon la revendication 1 ou selon la revendication 2, **caractérisé en ce qu'**une rainure longitudinale extérieure s'étendant axialement (8) est associée aux orifices traversants (5).

4. Système de verrouillage selon une des revendications précédentes, **caractérisé en ce que** le manchon (2) est aplati extérieurement dans la zone de l'orifice d'introduction (6).
